# EUROPÄISCHE PATENTSCHRIFT

(11) **EP 4 003 127 B1**
(45) Veröffentlichungstag und Bekanntmachung des Hinweises auf die Patenterteilung: **30.10.2024**
(21) Anmeldenummer: 20743997.7
(22) Anmeldetag: 16.07.2020
(51) Int. Cl.: A47L 15/42, A47L 15/23, A47L 15/22

(54) **HAUSHALTS-GESCHIRRSPÜLMASCHINE**
DOMESTIC DISHWASHER
LAVE-VAISSELLE DOMESTIQUE

(30) Priorität: 31.07.2019 DE 102019211433
(43) Veröffentlichungstag der Anmeldung: 01.06.2022
(73) Patentinhaber: BSH Hausgeräte GmbH, 81739 München (DE)
(72) Erfinder: LUGERT, Michael, 89343 Jettingen-Scheppach (DE); EISENBART, Bernd, 89438 Holzheim (DE); OBLINGER, Werner, 89426 Mödingen (DE)
(86) Internationale Anmeldenummer: PCT/EP2020/070105
(87) Internationale Veröffentlichungsnummer: WO 2021/018610

(56) Entgegenhaltungen:
- EP-A1- 0 068 974
- GB-A- 2 204 482
- JP-A- H04 164 430
- US-A- 5 477 874
- US-A- 5 700 329
- US-A1- 2002 014 260

## Beschreibung

Die vorliegende Erfindung betrifft eine Haushalts-Geschirrspülmaschine.

Eine Geschirrspülmaschine umfasst einen Spülbehälter, in dem zu reinigendes Spülgut aufgenommen werden kann. In dem Spülbehälter kann ein drehbarer Sprüharm vorgesehen sein, mit dessen Hilfe in dem Spülbehälter aufgenommenes Spülgut mit Spülflotte und/oder Frischwasser beaufschlagt werden kann. Der Spülbehälter umfasst einen Boden, an dem ein Siebsystem vorgesehen ist. Beim Gebrauch der Geschirrspülmaschine setzt sich das Siebsystem mit der Zeit mit Verunreinigungen zu und muss manuell gereinigt werden.

Die US 5,477,874 A beschreibt eine Geschirrspülmaschine mit einem Reinigungstank, einer Vielzahl von Geschirrbehältern, die vertikal in dem Reinigungstank angeordnet sind, und Reinigungsdüsen, die eine Vielzahl von Strahlöffnungen zum Ausstoßen von Reinigungswasser definieren.

Vor diesem Hintergrund besteht eine Aufgabe der vorliegenden Erfindung darin, eine verbesserte Haushalts-Geschirrspülmaschine zur Verfügung zu stellen.

Demgemäß wird eine Haushalts-Geschirrspülmaschine mit einem Spülbehälter, einem an einem Boden des Spülbehälters angeordneten Pumpentopf, einem an dem Pumpentopf vorgesehenen Siebsystem, einem Sprüharm zum Beaufschlagen von in dem Spülbehälter aufgenommenem Spülgut mit Spülflotte und/oder Frischwasser vorgeschlagen. Dabei umfasst der Sprüharm einen um eine erste Drehachse drehbar an dem Pumpentopf gelagerten Ausleger, der aktiv angetrieben ist, und einen um eine zweite Drehachse drehbar an dem Ausleger gelagerten Sprüharmsatelliten, wobei der Ausleger eine Siebreinigungsdüse zum Reinigen des Siebsystems mit Hilfe der Spülflotte und/oder des Frischwassers aufweist, und einer Antriebseinrichtung zum aktiven Antreiben des Auslegers, wobei die Antriebseinrichtung dazu eingerichtet ist, ein Siebreinigungsprogramm durchzuführen, bei dem der Ausleger zum Reinigen des Siebsystems in einer vorbestimmten Winkelposition verweilt und/oder bei dem sich der Ausleger zwischen zwei unterschiedlichen vorbestimmten Winkelpositionen hin- und herbewegt.

Dadurch, dass die Siebreinigungsdüse vorgesehen ist, kann auf ein manuelles Reinigen des Siebsystems, insbesondere eines Flächensiebs oder Feinsiebs des Siebsystems, verzichtet werden. Dies erhöht den Bedienkomfort der Haushalts-Geschirrspülmaschine.

Der Spülbehälter umfasst neben dem Boden bevorzugt eine dem Boden gegenüberliegend angeordnete Decke, eine aufklappbare Tür, eine der geschlossenen Tür gegenüberliegend angeordnete Rückwand sowie zwei Seitenwände. Vorzugsweise ist der Sprüharm an dem Boden vorgesehen. Der Sprüharm ist innerhalb des Spülbehälters angeordnet. Das Siebsystem umfasst vorzugsweise ein Feinsieb und ein Grobsieb. Die Siebreinigungsdüse ist insbesondere geeignet, das Feinsieb zu reinigen. Der Pumpentopf wird von dem Siebsystem abgedeckt. Das Siebsystem kann mit dem Pumpentopf verbunden sein. Der Pumpentopf ist insbesondere an dem Boden befestigt. Der Pumpentopf umfasst vorzugsweise einen rohrförmigen Pumpentopfdom, in oder an dem der Ausleger drehbar gelagert ist. Darunter, dass der Sprüharm geeignet ist, das Spülgut mit Spülflotte und/oder Frischwasser "zu beaufschlagen", ist vorliegend zu verstehen, dass das Spülgut mit Hilfe des Sprüharms mit Spülflotte und/oder Frischwasser benetzt wird. Unter "Spülflotte" kann vorliegend mit einem Reinigungsmittel versetztes Wasser zu verstehen sein. Die Spülflotte kann auch von dem Spülgut abgelöste Verschmutzungen umfassen.

Gemäß einer Ausführungsform weist der Sprüharmsatellit Sprühdüsen auf, wobei die Siebreinigungsdüse des Auslegers zu dem Boden hinweist, und wobei die Sprühdüsen des Sprüharmsatelliten von dem Boden wegweisen.

Das heißt, die Siebreinigungsdüse ist unterseitig an dem Sprüharm und die Sprühdüsen sind oberseitig an dem Sprüharm vorgesehen. Der Sprüharmsatellit kann zusätzliche Sprühdüsen aufweisen, die zu dem Boden hinweisen. Ebenfalls kann der Ausleger zusätzliche Sprühdüsen aufweisen, die zu dem Boden oder zu der Decke des Spülbehälters hinweisen.

Gemäß einer weiteren Ausführungsform sind eine dem Boden zugwandte Unterkante des Auslegers und eine dem Boden zugewandte Unterkante des Sprüharmsatelliten entlang der ersten Drehachse betrachtet auf derselben Höhe positioniert.

Hierdurch kann zuverlässig eine Kollision des Auslegers mit an dem Boden des Spülbehälters vorgesehenen Bauteilen, wie beispielsweise dem Grobsieb, einem Zuführrohr, einem Enthärterdeckel oder anderen Bauteilen, verhindert werden. Die "Unterkante" stellt insbesondere jeweils einen äußersten Punkt des Auslegers und des Sprüharmsatelliten dar.

Gemäß einer weiteren Ausführungsform sind eine dem Boden abgewandte Oberseite des Auslegers und eine dem Boden abgewandte Oberseite des Sprüharmsatelliten entlang der ersten Drehachse betrachtet auf derselben Höhe positioniert.

Hierdurch wird verhindert, dass der Sprüharmsatellit über die Oberseite des Auslegers hinausragt. Dies ergibt entlang der ersten Drehachse betrachtet eine besonders kompakte Bauform des Sprüharms.

Gemäß einer weiteren Ausführungsform umfasst der Ausleger einen ersten Arm, an dem der Sprüharmsatellit um die zweite Drehachse drehbar gelagert ist, und einen zweiten Arm, an dem die Siebreinigungsdüse vorgesehen ist.

Die Anzahl der Arme des Auslegers ist grundsätzlich beliebig. Besonders bevorzugt sind jedoch genau zwei Arme vorgesehen. Der erste Arm und der zweite Arm sind insbesondere einteilig, besonders bevorzugt materialeinstückig, ausgebildet. Unter "einteilig" ist vorliegend zu verstehen, dass der erste Arm und der zweite Arm ein gemeinsames Bauteil bilden und nicht aus unterschiedlichen Bauteilen aufgebaut sind. Unter "materialeinstückig" ist vorliegend zu verstehen, dass der erste Arm und der zweite Arm durchgehend aus demselben Material gefertigt sind. Dies schließt jedoch nicht aus, dass die Arme aus zwei fest miteinander verbundenen, insbesondere gegenseitig umspritzten oder alternativ miteinander verschweißten, Halbschalen aufgebaut sind.

Gemäß einer weiteren Ausführungsform sind der erste Arm und der zweite Arm entlang der ersten Drehachse betrachtet auf unterschiedlichen Höhen positioniert.

Hierdurch ergibt sich eine stufenförmige Geometrie des Auslegers.

Gemäß einer weiteren Ausführungsform ist die Siebreinigungsdüse dazu eingerichtet, einen Sprühstrahl zu erzeugen, der schräg zu der ersten Drehachse orientiert ist. Hierdurch wird die Spülflotte und/oder das Frischwasser schräg auf das Siebsystem aufgedüst. Hierdurch können Verunreinigungen besonders gut entfernt werden. Dies verbessert das Reinigungsergebnis.

Gemäß einer weiteren Ausführungsform ist der Sprüharmsatellit mit Hilfe der Spülflotte und/oder des Frischwassers rückstoßangetrieben.

Unter "rückstoßangetrieben" ist vorliegend zu verstehen, dass der Sprüharmsatellit mit Hilfe aus den Sprühdüsen desselben austretender Spülflotte und/oder Frischwasser in Rotation versetzt wird. Der Sprüharmsatellit kann hierzu auch zusätzliche Antriebssprühdüsen umfassen.

Der Ausleger ist aktiv angetrieben.

Darunter, dass der Ausleger "aktiv" angetrieben ist, ist vorliegend zu verstehen, dass eine

Antriebseinrichtung vorgesehen ist, um den Ausleger in Rotation zu versetzen. Alternativ auch wenn nicht Gegenstand der beanspruchten Erfindung, kann der Ausleger auch nicht aktiv, sondern rückstoßangetrieben sein.

Die Haushalts-Geschirrspülmaschine umfasst ferner eine Antriebseinrichtung zum aktiven Antreiben des Auslegers, wobei die Antriebseinrichtung dazu eingerichtet ist, ein Siebreinigungsprogramm durchzuführen, bei dem der Ausleger zum Reinigen des Siebsystems in einer vorbestimmten Winkelposition verweilt und/oder bei dem sich der Ausleger zwischen zwei unterschiedlichen vorbestimmten Winkelpositionen hin- und herbewegt. Beispielsweise kann der Ausleger bei dem Siebreinigungsprogramm über einen Vorwärts- und Rückwärtslauf innerhalb einer Halbkreisbahn das Feinsieb des Siebsystems benetzen. Ferner ist ein punktuelles Verweilen für eine definierte Zeit auf bestimmten Winkelpositionen des Feinsiebs möglich. Es kann ein automatischer Ablauf des Siebreinigungsprogramms innerhalb jedes Spülzyklus vorgesehen sein. Alternativ kann nach einer vorbestimmten Anzahl an Spülzyklen das Siebreinigungsprogramm durchgeführt werden oder der Benutzer kann das Siebreinigungsprogramm zusätzlich zum Spülzyklus manuell wählen. Es kann somit eine deutlich verbesserte Siebreinigung erzielt werden. "Vorbestimmt" heißt dabei, dass die Winkelpositionen beispielsweise von dem Siebreinigungsprogramm vorgegeben sind.

Weitere mögliche Implementierungen der Haushalts-Geschirrspülmaschine umfassen auch nicht explizit genannte Kombinationen von zuvor oder im Folgenden bezüglich der in den Ausführungsbeispielen beschriebenen Merkmalen oder Ausführungsformen. Dabei wird der Fachmann auch Einzelaspekte als Verbesserungen oder Ergänzungen zu der jeweiligen Grundform der Haushalts-Geschirrspülmaschine hinzufügen.

Weitere vorteilhafte Ausgestaltungen und Aspekte der Haushalts-Geschirrspülmaschine sind Gegenstand der Unteransprüche sowie der im Folgenden beschriebenen Ausführungsbeispiele der Haushalts-Geschirrspülmaschine. Im Weiteren wird die Haushalts-Geschirrspülmaschine anhand von bevorzugten Ausführungsformen unter Bezugnahme auf die beigelegten Figuren näher erläutert.
Fig. 1 zeigt eine schematische perspektivische Ansicht einer Ausführungsform einer Haushalts-Geschirrspülmaschine; und
Fig. 2 zeigt eine schematische Seitenansicht einer Ausführungsform einer Sprühvorrichtung für die Haushalts-Geschirrspülmaschine gemäß Fig. 1.

In den Figuren sind gleiche oder funktionsgleiche Elemente mit denselben Bezugszeichen versehen worden, sofern nichts anderes angegeben ist.

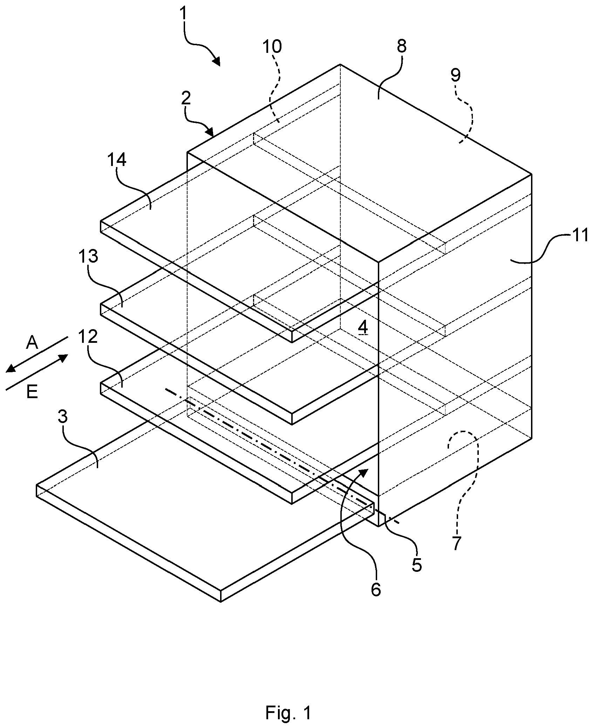

Die Fig. 1 zeigt eine schematische perspektivische Ansicht einer Ausführungsform einer Haushalts-Geschirrspülmaschine 1. Die Haushalts-Geschirrspülmaschine 1 umfasst einen Spülbehälter 2, der durch eine Tür 3, insbesondere wasserdicht, verschließbar ist. Hierzu kann zwischen der Tür 3 und dem Spülbehälter 2 eine Dichteinrichtung vorgesehen sein. Der Spülbehälter 2 ist vorzugsweise quaderförmig. Der Spülbehälter 2 kann in einem Gehäuse der Haushalts-Geschirrspülmaschine 1 angeordnet sein. Der Spülbehälter 2 und die Tür 3 können einen Spülraum 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Spülbehälters 2 geschlossen oder geöffnet werden. Der Spülbehälter 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Alternativ kann beispielsweise der Boden 7 aus einem Kunststoffmaterial gefertigt sein.

Die Haushalts-Geschirrspülmaschine 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Spülbehälter 2 angeordnet. Jede Spülgutaufnahme 12 bis 14 ist wahlweise in den Spülbehälter 2 hinein- oder aus diesem herausverlagerbar. Insbesondere ist jede Spülgutaufnahme 12 bis 14 in einer Einschubrichtung E in den Spülbehälter 2 hineinschiebbar oder hineinfahrbar und entgegen der Einschubrichtung E in einer Auszugsrichtung A aus dem Spülbehälter 2 herausziehbar oder herausfahrbar.

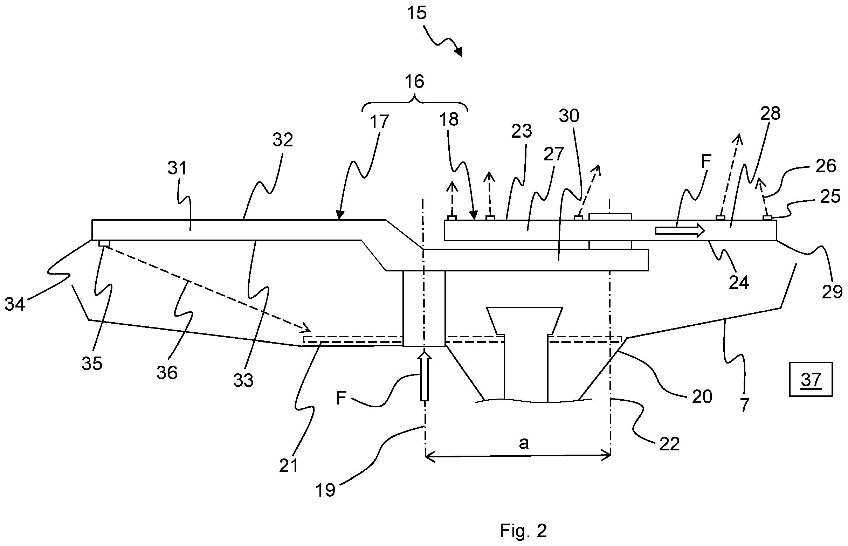

Die Fig. 2 zeigt eine schematische Seitenansicht einer Ausführungsform einer Sprühvorrichtung 15 für die Haushalts-Geschirrspülmaschine 1. Die Sprühvorrichtung 15 ist vorzugsweise an dem Boden 7 des Spülbehälters 2 vorgesehen. Die Sprühvorrichtung 15 umfasst einen drehbar gelagerten Sprüharm 16 mit einem Ausleger 17 sowie einem drehbar an dem Ausleger 17 gelagerten Sprüharmsatelliten 18. Der Ausleger 17 ist um eine erste Drehachse 19 drehbar an einem Pumpentopf 20 der Haushalts-Geschirrspülmaschine 1 gelagert. Der Pumpentopf 20 ist an dem Boden 7 vorgesehen. Der Pumpentopf 20 ist von einem Siebsystem 21 abgedeckt. Das Siebsystem 21 kann ein Grobsieb und ein Feinsieb umfassen. Das Feinsieb ist ein Flächensieb oder kann als Flächensieb bezeichnet werden.

Der Sprüharmsatellit 18 ist um eine zweite Drehachse 22 drehbar an dem Ausleger 17 gelagert. Die Drehachsen 19, 22 sind parallel zueinander und um einen Abstand a voneinander beabstandet angeordnet. Der Sprüharmsatellit 18 weist eine dem Boden 7 abgewandte Oberseite 23 und eine dem Boden 7 zugewandte Unterseite 24 auf. An der Oberseite 23 ist eine Vielzahl an Sprühdüsen 25 vorgesehen, die dem Boden 7 abgewandt und der Decke 8 zugewandt sind. In der Fig. 2 ist nur eine der Sprühdüsen 25 mit einem Bezugszeichen versehen.

Die Sprühdüsen 25 sind geeignet, Sprühstrahlen 26 zu erzeugen, mit deren Hilfe Spülgut (nicht gezeigt) mit Spülflotte und/oder Frischwasser F beaufschlagt werden kann. Insbesondere sind die Sprühdüsen 25 nur oberseitig an dem Sprüharmsatelliten 18 vorgesehen. Alternativ können die Sprühdüsen 25 auch so angeordnet sein, dass diese in Richtung des Bodens 7 weisen. Weiterhin kann der Sprüharmsatellit 18 auch oberseitige und unterseitige Sprühdüsen 25 aufweisen.

Der Sprüharmsatellit 18 weist mehrere Arme 27, 28 auf. Die Anzahl der Arme 27, 28 ist beliebig. Beispielsweise sind drei derartige Arme 27, 28 vorgesehen, die um einen Umfangswinkel von 120° zueinander beabstandet angeordnet sind. Jeder der Arme 27, 28 weist eine äußerste, dem Boden 7 zugewandte Unterkante 29 auf.

Der Ausleger 17 umfasst einen ersten Arm 30, an dem der Sprüharmsatellit 18 um die zweite Drehachse 22 drehbar gelagert ist. Weiterhin umfasst der Ausleger 17 einen zweiten Arm 31. Der erste Arm 30 und der zweite Arm 31 sind entlang der ersten Drehachse 19 betrachtet auf unterschiedlichen Höhen angeordnet. Insbesondere ist der erste Arm 30 näher an dem Boden 7 angeordnet als der zweite Arm 31.

Der zweite Arm 31 weist eine Oberseite 32 und eine der Oberseite 32 abgewandte Unterseite 33 auf. Die Oberseite 32 ist der Decke 8 zugewandt. Die Unterseite 33 ist dem Boden 7 zugewandt. Die Oberseite 32 ist entlang der ersten Drehachse 19 betrachtet auf derselben Höhe angeordnet wie die Oberseite 23 des Sprüharmsatelliten 18. Eine äußerste Unterkante 34 des Auslegers 17, insbesondere des zweiten Arms 31, ist entlang der ersten Drehachse 19 betrachtet auf derselben Höhe angeordnet wie die Unterkante 29 des Sprüharmsatelliten 18.

An der Unterseite 33 ist ferner eine Siebreinigungsdüse 35 zum Reinigen des Siebsystems 21 vorgesehen. Die Siebreinigungsdüse 35 ist dazu eingerichtet, einen Sprühstrahl 36 zu erzeugen, der schräg zu der ersten Drehachse 19 in Richtung auf das Siebsystem 21 zu orientiert ist.

Der Ausleger 17 kann ebenfalls zusätzliche Sprühdüse aufweisen. Dies ist jedoch nicht zwingend erforderlich. Der Ausleger 17 ist aktiv angetrieben. Unter "aktiv angetrieben" ist vorliegend zu verstehen, dass dem Sprüharm 16, insbesondere dem Ausleger 17, eine Antriebseinrichtung 37, beispielsweise umfassend einen Elektromotor, zugeordnet ist, die geeignet ist, den Ausleger 17 um die erste Drehachse 19 in Rotation zu versetzen. Der Ausleger 17 kann alternativ jedoch, auch wenn dies nicht Gegenstand der beanspruchten Erfindung ist, auch rückstoßangetrieben sein.

Im Gegensatz hierzu ist der Sprüharmsatellit 18 nicht aktiv angetrieben. Insbesondere wird der Sprüharmsatellit 18 durch die aus den Sprühdüsen 25 austretenden Sprühstrahlen 26 in Rotation versetzt. Es können auch spezielle Antriebssprühdüsen vorgesehen sein.

Mit Hilfe der Antriebseinrichtung 37 kann ein Siebreinigungsprogramm durchgeführt werden, bei dem der Ausleger 17 zum Reinigen des Siebsystems 21 in einer vorbestimmten Winkelposition verweilt und/oder bei dem sich der Ausleger 17 zwischen zwei unterschiedlichen vorbestimmten Winkelpositionen hin- und herbewegt. "Vorbestimmt" heißt dabei, dass die Winkelpositionen beispielsweise von dem Siebreinigungsprogramm vorgegeben sind.

Dadurch, dass die Unterkanten 29, 34 entlang der ersten Drehachse 19 betrachtet auf derselben Höhe angeordnet sind, kann verhindert werden, dass der Ausleger beispielsweise mit einem Grobsieb, einem Zuführrohr oder einem Enthärterdeckel der Haushalts-Geschirrspülmaschine 1 kollidiert. Die Gefahr einer Kollision bestünde für den Fall, dass die Arme 30, 31 des Auslegers 17 entlang der ersten Drehachse 19 betrachtet auf derselben Höhe und somit die Außenkanten 29, 34 auf unterschiedlichen Höhen positioniert wären. Durch die vorbeschriebene Geometrie des Auslegers 17 wird eine derartige Kollision zuverlässig verhindert.

Mit Hilfe des Siebreinigungsprogramms kann der Ausleger 17 mit Hilfe der Siebreinigungsdüse 35 und damit mit Hilfe des Sprühstrahls 36 über Vorwärts- und Rückwärtslauf des Auslegers 17 innerhalb einer Halbkreisbahn das Feinsieb des Siebsystems 21 benetzen. Ferner ist ein punktuelles Verweilen für eine definierte Zeit auf bestimmten Winkelpositionen auf dem Feinsieb des Filtersystems 21 möglich. Hierdurch wird das Filtersystem 21 zuverlässig gereinigt. Es kann ferner ein automatischer Ablauf des Siebreinigungsprogramms innerhalb jedes Spülzyklus vorgesehen sein. Alternativ kann nach einer bestimmten Anzahl an Spülzyklen oder zusätzlich zum normalen Spülzyklus das Siebreinigungsprogramm vom Benutzer manuell gewählt werden. Es kann somit eine verbesserte und automatisierte Reinigung des Siebsystems 21 erzielt werden.

Obwohl die vorliegende Erfindung anhand von Ausführungsbeispielen beschrieben wurde, ist sie vielfältig modifizierbar.

### Verwendete Bezugszeichen:

- 1: Haushalts-Geschirrspülmaschine
- 2: Spülbehälter
- 3: Tür
- 4: Spülraum
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme
- 13: Spülgutaufnahme
- 14: Spülgutaufnahme
- 15: Sprühvorrichtung
- 16: Sprüharm
- 17: Ausleger
- 18: Sprüharmsatellit
- 19: Drehachse
- 20: Pumpentopf
- 21: Siebsystem
- 22: Drehachse
- 23: Oberseite
- 24: Unterseite
- 25: Sprühdüse
- 26: Sprühstrahl
- 27: Arm
- 28: Arm
- 29: Unterkante
- 30: Arm
- 31: Arm
- 32: Oberseite
- 33: Unterseite
- 34: Unterkante
- 35: Siebreinigungsdüse
- 36: Sprühstrahl
- 37: Antriebseinrichtung

- a: Abstand
- A: Auszugsrichtung
- E: Einschubrichtung
- F: Spülflotte und/oder Frischwasser

## Patentansprüche

1. Haushalts-Geschirrspülmaschine (1) mit einem Spülbehälter (2), einem an einem Boden (7) des Spülbehälters (2) angeordneten Pumpentopf (20), einem an dem Pumpentopf (20) vorgesehenen Siebsystem (21), einem Sprüharm (16) zum Beaufschlagen von in dem Spülbehälter (2) aufgenommenem Spülgut mit Spülflotte und/oder Frischwasser (F), wobei der Sprüharm (16) einen um eine erste Drehachse (19) drehbar an dem Pumpentopf (20) gelagerten Ausleger (17), der aktiv angetrieben ist, und einen um eine zweite Drehachse (22) drehbar an dem Ausleger (17) gelagerten Sprüharmsatelliten (18) umfasst, und wobei der Ausleger (17) eine Siebreinigungsdüse (35) zum Reinigen des Siebsystems (21) mit Hilfe der Spülflotte und/oder des Frischwassers (F) aufweist, und einer Antriebseinrichtung (37) zum aktiven Antreiben des Auslegers (17), **dadurch gekennzeichnet, dass** die Antriebseinrichtung (37) dazu eingerichtet ist, ein Siebreinigungsprogramm mit Hilfe der Siebreinigungsdüse (35) durchzuführen, bei dem der Ausleger (17) zum Reinigen des Siebsystems (21) in einer vorbestimmten Winkelposition verweilt und/oder bei dem sich der Ausleger (17) zwischen zwei unterschiedlichen vorbestimmten Winkelpositionen hin- und herbewegt.

2. Haushalts-Geschirrspülmaschine nach Anspruch 1, **dadurch gekennzeichnet, dass** der Sprüharmsatellit (18) Sprühdüsen (25) aufweist, wobei die Siebreinigungsdüse (35) des Auslegers (17) zu dem Boden (7) hinweist, und wobei die Sprühdüsen (25) des Sprüharmsatelliten (18) von dem Boden (7) wegweisen.

3. Haushalts-Geschirrspülmaschine nach Anspruch 1 oder 2, **dadurch gekennzeichnet, dass** eine dem Boden (7) zugewandte Unterkante (34) des Auslegers (17) und eine dem Boden (7) zugewandte Unterkante (29) des Sprüharmsatelliten (18) entlang der ersten Drehachse (19) betrachtet auf derselben Höhe positioniert sind.

4. Haushalts-Geschirrspülmaschine nach einem der Ansprüche 1 - 3, **dadurch gekennzeichnet, dass** eine dem Boden (7) abgewandte Oberseite (32) des Auslegers (17) und eine dem Boden (7) abgewandte Oberseite (23) des Sprüharmsatelliten (18) entlang der ersten Drehachse (19) betrachtet auf derselben Höhe positioniert sind.

5. Haushalts-Geschirrspülmaschine nach einem der Ansprüche 1 - 4, **dadurch gekennzeichnet, dass** der Ausleger (17) einen ersten Arm (30), an dem der Sprüharmsatellit (18) um die zweite Drehachse (22) drehbar gelagert ist, und einen zweiten Arm (31), an dem die Siebreinigungsdüse (35) vorgesehen ist, umfasst.

6. Haushalts-Geschirrspülmaschine nach Anspruch 5, **dadurch gekennzeichnet, dass** der erste Arm (30) und der zweite Arm (31) entlang der ersten Drehachse (19) betrachtet auf unterschiedlichen Höhen positioniert sind.

7. Haushalts-Geschirrspülmaschine nach einem der Ansprüche 1 - 6, **dadurch gekennzeichnet, dass** die Siebreinigungsdüse (35) dazu eingerichtet ist, einen Sprühstrahl (36) zu erzeugen, der schräg zu der ersten Drehachse (19) orientiert ist.

8. Haushalts-Geschirrspülmaschine nach einem der Ansprüche 1 - 7, **dadurch gekennzeichnet, dass** der Sprüharmsatellit (18) mit Hilfe der Spülflotte und/oder des Frischwassers rückstoßangetrieben ist.

## Claims

1. Household dishwasher (1) having a dishwasher cavity (2), a sump (20) which is arranged at a bottom (7) of the dishwasher cavity (2), a filter system (21) which is provided at the sump (20), a spray arm (16) for applying washing liquor and/or fresh water (F) to a dishwasher load that is held in the dishwasher cavity (2), wherein the spray arm (16) comprises an extension piece (17) which is actively driven and which is mounted on the sump (20) and can rotate about a first axis of rotation (19), and a spray arm satellite (18) which is mounted on the extension piece (17) and can rotate about a second axis of rotation (22), and wherein the extension piece (17) has a filter cleaning nozzle (35) for cleaning the filter system (21) with the aid of the washing liquor and/or fresh water (F), and a drive facility (37) for actively driving the extension piece (17), **characterised in that** the drive facility (37) is configured to perform a filter cleaning program with the aid of the filter cleaning nozzle (35), during which the extension piece (17) remains in a predefined angular position for the purpose of cleaning the filter system (21) and/or during which the extension piece (17) moves back and forth between two different predefined angular positions.

2. Household dishwasher according to claim 1, **characterised in that** the spray arm satellite (18) has spray nozzles (25), wherein the filter cleaning nozzle (35) of the extension piece (17) points towards the bottom (7), and wherein the spray nozzles (25) of the spray arm satellite (18) point away from the bottom (7).

3. Household dishwasher according to claim 1 or 2, **characterised in that** a lower edge (34) of the extension piece (17) facing towards the bottom (7) and a lower edge (29) of the spray arm satellite (18) facing towards the bottom (7) are positioned at the same height viewed along the first axis of rotation (19).

4. Household dishwasher according to one of claims 1 - 3, **characterised in that** an upper side (32) of the extension piece (17) facing away from the bottom (7) and an upper side (23) of the spray arm satellite (18) facing away from the bottom (7) are positioned at the same height viewed along the first axis of rotation (19).

5. Household dishwasher according to one of claims 1 - 4, **characterised in that** the extension piece (17) comprises a first arm (30), on which the spray arm satellite (18) is mounted and can rotate about the second axis of rotation (22), and a second arm (31), on which the filter cleaning nozzle (35) is provided.

6. Household dishwasher according to claim 5, **characterised in that** the first arm (30) and the second arm (31) are positioned at different heights viewed along the first axis of rotation (19).

7. Household dishwasher according to one of claims 1 - 6, **characterised in that** the filter cleaning nozzle (35) is configured to produce a spray jet (36) which is oriented obliquely relative to the first axis of rotation (19).

8. Household dishwasher according to one of claims 1 - 7, **characterised in that** the spray arm satellite (18) is reactively driven by means of the washing liquor and/or the fresh water.

## Revendications

1. Lave-vaisselle ménager (1) comprenant
une cuve de lavage (2),
un pot de pompe (20) disposé au niveau d'un fond (7) de la cuve de lavage (2),
un système de tamis (21) agencé au niveau du pot de pompe (20),
un bras de pulvérisation (16) pour injecter du liquide de lavage et/ou de l'eau douce (F) sur des articles à laver reçus dans la cuve de lavage (2),
dans lequel le bras de pulvérisation (16) comprend un bras en porte à faux (17) monté de façon à pouvoir tourner autour d'un premier axe de rotation (19) sur le pot de pompe (20), qui est entraîné activement, et un satellite de bras de pulvérisation (18) monté de façon à pouvoir tourner autour d'un deuxième axe de rotation (22) sur le bras en porte à faux (17), et dans lequel le bras en porte à faux (17) comprend une buse de nettoyage de tamis (35) pour nettoyer le système de tamis (21) à l'aide du liquide de lavage et/ou d'eau douce (F), et
un dispositif d'entraînement (37) pour entraîner activement le bras en porte à faux (17), **caractérisé en ce que**
le dispositif d'entraînement (37) est configuré pour exécuter un programme de nettoyage de tamis à l'aide de la buse de nettoyage de tamis (35), dans lequel le bras en porte à faux (17) séjourne dans une position angulaire prédéterminée pour nettoyer le système de tamis (21) et/ou dans lequel le bras en porte à faux (17) se déplace en un mouvement de va-et-vient entre deux positions angulaires prédéterminées différentes.

2. Lave-vaisselle ménager selon la revendication 1, **caractérisé en ce que** le satellite de bras de pulvérisation (18) comprend des buses de pulvérisation (25), dans lequel la buse de nettoyage de tamis (35) du bras en porte à faux (17) renvoie vers le fond (7), et dans lequel les buses de pulvérisation (25) du satellite de bras de pulvérisation (18) s'éloignent du fond (7).

3. Lave-vaisselle ménager selon la revendication 1 ou 2, **caractérisé en ce qu'**un bord inférieur (34) du bras en porte à faux (17) orienté vers le fond (7) et un bord inférieur (29) du satellite de bras de pulvérisation (18) orienté vers le fond (7) sont positionnés à la même hauteur vu le long du premier axe de rotation (19).

4. Lave-vaisselle ménager selon l'une des revendications 1 à 3, **caractérisé en ce qu'**un côté supérieur (32) du bras en porte à faux (17) opposé au fond (7) et un côté supérieur (23) du satellite du bras de pulvérisation (18) opposé au fond (7) sont positionnés à la même hauteur, vu le long du premier axe de rotation (19).

5. Lave-vaisselle ménager selon l'une des revendications 1 à 4, **caractérisé en ce que** le bras en porte à faux (17) comprend un premier bras (30) sur lequel le satellite du bras de pulvérisation (18) est monté de façon à pouvoir tourner autour du deuxième axe de rotation (22), et un deuxième bras (31) sur lequel la buse de nettoyage de tamis (35) est disposée.

6. Lave-vaisselle ménager selon la revendication 5, **caractérisé en ce que** le premier bras (30) et le deuxième bras (31) sont positionnés à des hauteurs différentes, vu le long du premier axe de rotation (19).

7. Lave-vaisselle ménager selon l'une des revendications 1 à 6, **caractérisé en ce que** la buse de nettoyage de tamis (35) est configurée pour produire un jet de pulvérisation (36), qui est orienté de façon inclinée par rapport au premier axe de rotation (19).

8. Lave-vaisselle ménager selon l'une des revendications 1 à 7, **caractérisé en ce que** le satellite de bras de pulvérisation (18) est propulsé par réaction à l'aide du liquide de lavage et/ou d'eau douce.
